# EUROPÄISCHE PATENTSCHRIFT

(11) **EP 0 950 588 B1**
(45) Veröffentlichungstag und Bekanntmachung des Hinweises auf die Patenterteilung: **29.06.2005**
(21) Anmeldenummer: 99106088.0
(22) Anmeldetag: 26.03.1999
(51) Int. Cl.: B60S 1/52, B60S 1/60, B62D 25/24

(54) **Abdeckung für eine Scheinwerferreinigungsanlage**
Cover for a headlamp cleaning device
Couvercle pour un dispositif de nettoyage de phare

(30) Priorität: 16.04.1998 DE 19816826
(43) Veröffentlichungstag der Anmeldung: 20.10.1999
(73) Patentinhaber: Volkswagen Aktiengesellschaft, 38436 Wolfsburg (DE)
(72) Erfinder: Hakenes, Christoph, 38527 Meine-Abbesbüttel (DE)

(56) Entgegenhaltungen:
- DE-A- 4 426 878
- DE-C- 19 637 033
- FR-A- 2 682 658

## Beschreibung

Die Erfindung betrifft eine Abdeckung für eine Scheinwerferreinigungsanlage, die eine durch eine Öffnung einer karosseriefesten Außenwandung zwischen einer Ruheposition innerhalb der Fahrzeugkarosserie und einer Betriebsposition außerhalb derselben verbringbare Hub-Spritzdüse aufweist, mit einer die Öffnung verschließenden Abdeckkappe, insbesondere für ein Kraftfahrzeug.

Es ist bekannt, eine Öffnung in einer karosseriefesten Außenwandung eines Fahrzeuges und eine in einer Ruheposition innerhalb der Fahrzeugkarosserie hinter der Öffnung befindliche Hub-Spritzdüse mit einer den Rand der Öffnung übergreifenden Abdeckkappe zu verschließen. So ist Gegenstand der DE 196 37 033 C1 eine flächenbündig mit der Außenwandung der Fahrzeugkarosserie abschließende, in eine Freigabestellung aus der Öffnung zur Sichtseite der Außenwandung hin ausschwenkbare Abdeckkappe, die an einem formschlüssig in die Öffnung einsetzbaren Montagerahmen schwenkbar angeordnet ist und in der Schließstellung die von dem Montagerahmen umrandete Öffnung sichtseitig überdeckt. Die Abdeckkappe ist dabei um ein Schwenkachse schwenkbar, die im Innem der Fahrzeugkarosserie durch an dem Rahmen angeordneten Halterungsmitteln im wesentlichen parallel zur Außenwandung angeordnet ist, und wird von der Hub-Spritzdüse betätigt. In der DE 44 26 878 C2 ist eine Scheinwerferreinigungsanlage mit einer Abdeckung beschrieben, die im Bereich eines Randes der Öffnung in der Außenwandung schwenkbar gelagert ist. Die Betätigung der Abdeckung erfolgt durch die Hub-Spritzdüse.

Bedingt durch die im Innern der Karosserie festgelegte Schwenkachse muß bei diesen Abdeckungen ein ausreichend breiter Spalt zwischen der jeweiligen Abdeckkappe und der Karosserieöffnung im Bereich der Schwenkachse gegeben sein, damit die Abdeckkappe beim Öffnen nicht an den Rand der Öffnung anstößt. Überdies läßt eine festgelegte Schwenkachse wenig Spielraum für eine zentrierte Anordnung und Anpassung der Abdeckklappe in der Karosserieöffnung, insbesondere bei gewölbten Karosseriewandungen.

Es ist Aufgabe der Erfindung, eine Abdeckung für eine Scheinwerferreinigungsanlage nach dem Oberbegriff des Anspruchs 1 zu schaffen, bei der die Abdeckkappe variabel und durch den Rand der Karosserieöffnung unbehindert schwenkbar ist.

Diese Aufgabe wird bei einer Abdeckung nach dem Oberbegriff des Anspruchs 1 durch dessen kennzeichnende Merkmale gelöst.

Die Halterung der Abdeckkappe ist erfindungsgemäß aus den Elementen einer Kulissenführung gebildet, die im Innem der Führungskarosserie im Bereich der Öffnung angeordnet ist.

Diese gegenüber einer festgelegten Schwenkachse schwebende Halterung ermöglicht eine variable Schwenkung. In Abhängigkeit von der Ausbildung der Kulissenführung sind beliebige Schwenkrichtungen möglich. Die Gefahr eines Anstoßens der Abdeckkappe an der Karosseriewandung ist nicht gegeben.

Die Elemente der Kulissenführung können beidseits der Abdeckkappe angeordnet sein und jeweils aus einer Führungskulisse und einem in dieser verdrehfest verschiebbaren Gleitelement bestehen, wobei die Führungskulisse jeweils an einem karosseriefesten Halterungsarm ausgebildet und das Gleitelement an einem an der Abdeckkappe ausgebildeten Auslegerarm angeordnet sein können. Die Halterungsarme sind vorteilhaft an einem an der Öffnung mit der Karosseriewandung fest oder lösbar verbindbaren Rahmen ausgebildet , der beispielsweise als Kunststoffteil mit den Halterungsarmen einstückig herstellbar ist.

Die Abdeckkappe kann so angeordnet sein, daß sie vom Kopf der Spritzdüse betätigt wird und eine Rückholfeder aufweist, die ein karosseriefestes Widerlager hat und die Abdeckkappe bei einer Bewegung der Hub-Spritzdüse in die Ruheposition in deren Schließposition zurückzieht.

Zum Zentrieren der Abdeckkappe in der Karosserieöffnung kann deren Rand vorteilhaft mit angeschrägten Anlageflächen zur Anlage am Rand der Karosserieöffnung oder am Rahmen ausgebildeten Anlageflächen, die vorzugsweise ebenfalls angeschrägt sind, versehen sein.

Die Erfindung wird nachstehend anhand eines Ausführungsbeispiels beschrieben. In der zugehörigen Zeichnung zeigen schematisch:
- Fig. 1:: eine Seitenansicht einer erfindungsgemäßen Abdeckung, teilweise geschnitten,
- Fig. 2:: eine Seitenansicht eines Vertikalschnittes durch die Abdeckung,
- Fig. 3:: die Abdeckkappe der Abdeckeinrichtung,
- Fig. 4:: einen Rahmen mit Führungskulissen und
- Fig. 5:: eine Draufsicht auf die Anordnung der Abdeckkappe.

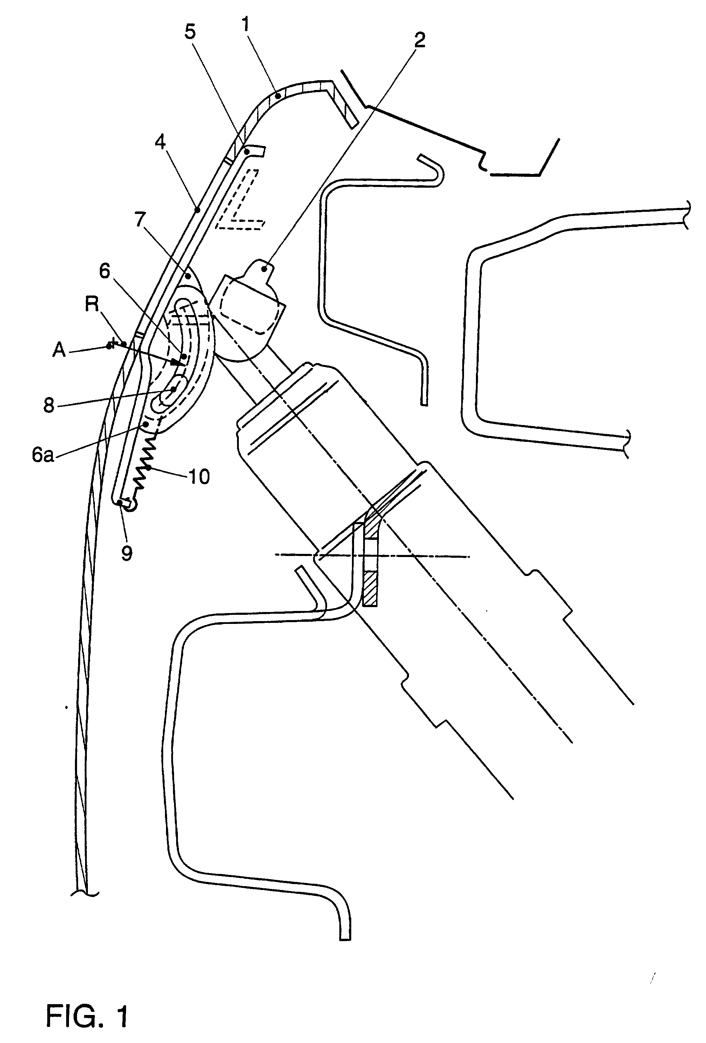

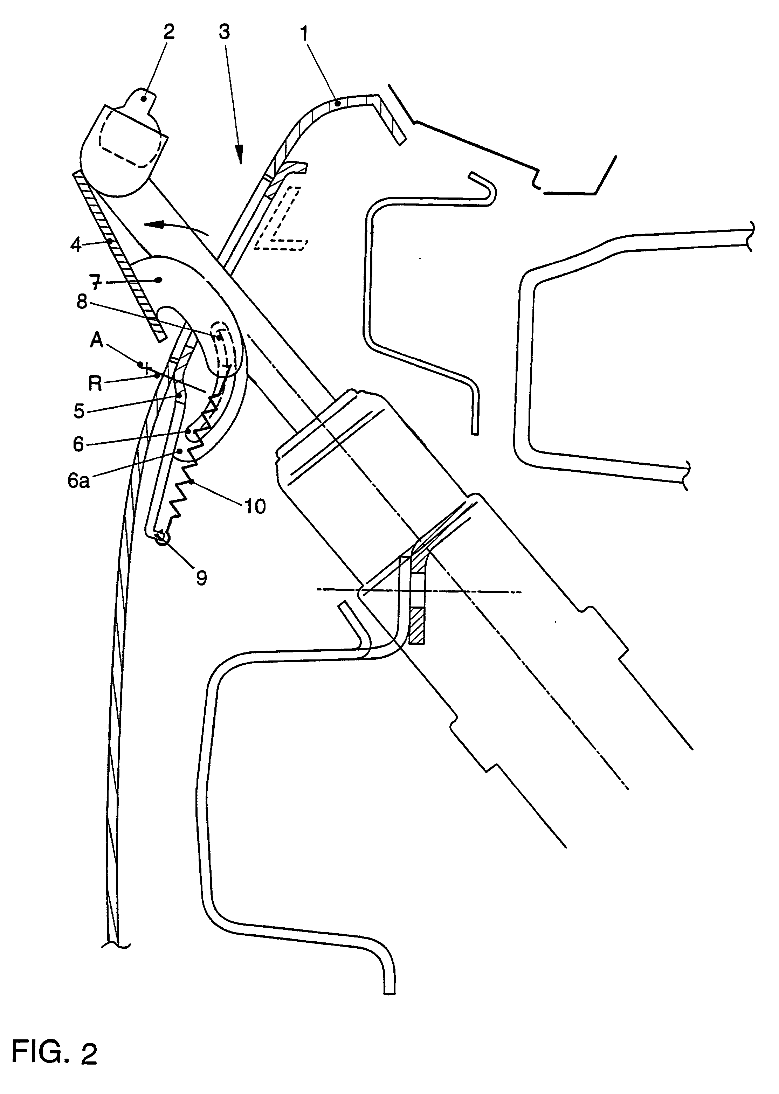

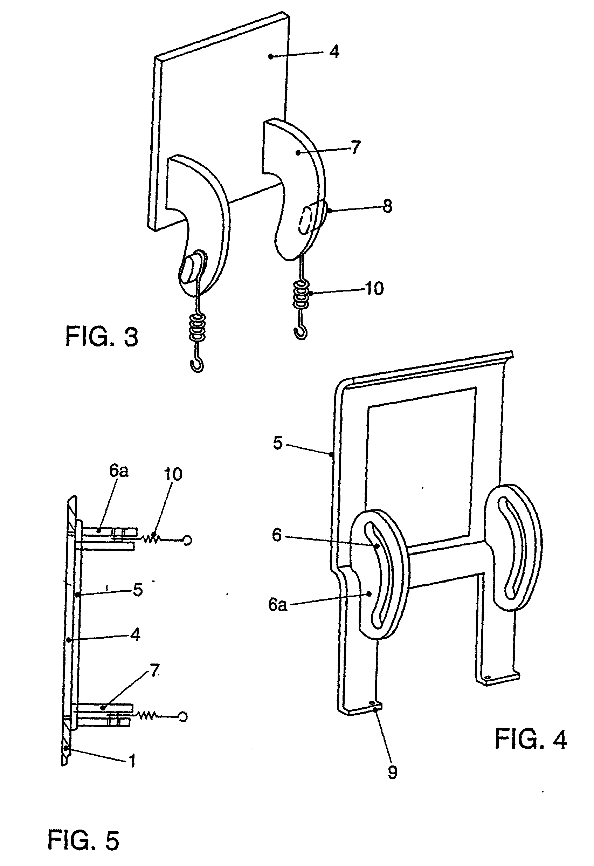

Fig. 1 zeigt eine an einem Stoßfänger 1 angeordnete erfindungsgemäße Abdeckung für eine Scheinwerferreinigungsanlage mit einer in einer Ruheposition innerhalb des Stoßfängers 1 befindlichen Hub-Spritzdüse 2, mit einer eine Öffnung 3 (Fig. 2) verschließenden Abdeckkappe 4, die an einem Rahmen 5 schwenkbar gehaltert ist. Die Halterung der Abdeckkappe 4 ist aus zwei am Rahmen 5 ausgebildeten Halterungsarmen 6a mit jeweils einer Führungskulisse 6 (Fig. 4) und zwei in diese eingreifenden und jeweils an einem Auslegerarm 7 (auch Fig. 3) angeformten Gleitelementen 8 gebildet. Diese sind länglich ausgebildet und an den Kurvenradius R der Führungskulissen 6 angepaßt und somit drehfest in diesen verschiebbar angeordnet. Der Rahmen 5 ist fest mit dem Stoßfänger 1 verbunden. Zwischen dem jeweiligen Gleitelement 8 und einem am Rahmen 5 ausgebildeten Widerlager 9 ist jeweils eine Zugfeder 10 angeordnet, die die Abdeckkappe 4 in der Schließstellung hält.

In Fig. 2 zeigt die Abdeckkappe 4 in einer durch die Hub-Spritzdüse 2 bestimmten Offenstellung. Die Gleitelemente 8 befinden sich im Endbereich der Führungskulisse 6, die Zugfedern 10 sind stark gespannt.

In den Fig. 3 und 4 sind die Abdeckkappe 4 und der Rahmen 5 in perspektivischer Darstellung gezeigt. Die Zugfedern 10 sind an den Gleitelementen 8 fixiert und, wie in Fig. 5 gezeigt, zwischen dem jeweiligen Halterungsarm 6a und dem jeweiligen Auslegerarm 7 angeordnet.

Wird die Hub-Spritzdüse 2 aus der in Fig. 1 dargestellten Ruheposition in die in Fig. 2 gezeigte Betriebsposition gefahren, so wird die Abdeckkappe 4 durch den Düsenkörper (Kopf der Hub-Spritzdüse 2) betätigt. Dabei wird sie nach außen gedrückt, wobei die Gleitelemente 8 gegen die Kraft der Zugfedern 10 in der Führungskulisse 6, die kreisbogenförmig (Radius R) ausgebildet ist, verdrehfest nach oben verschoben werden. Die Gleitelemente 8 bewegen sich dabei auf einer Kreisbahn und schwenken die Abdeckkappe 4 um die fiktive Achse A. In der durch die Betriebsposition der Hub-Spritzdüse 2 bestimmten Offenstellung liegt die Abdeckkappe 4 vorgespannt an dieser an und wird bei einer Bewegung derselben in die Ruheposition durch die Zugfedern 10 wieder zurückgeholt.

## Patentansprüche

1. Abdeckung für eine Scheinwerferreinigungsanlage, die eine durch eine Öffnung (3) einer karosseriefesten Außenwandung (1) zwischen einer Ruheposition innerhalb der Fahrzeugkarosserie und einer Betriebsposition außerhalb derselben verbringbare Hub-Spritzdüse (2) aufweist, mit einer betätigbaren und die Öffnung (3) in der Ruheposition verschließenden und in der Betriebsposition freigebenden Abdeckkappe (4), die an der Karosserie schwenkbar gehaltert und in Richtung auf ihre Schließstellung vorgespannt ist, **dadurch gekennzeichnet, daß** die Halterung der Abdeckkappe (4) aus Elementen (6, 6a; 7, 8) einer Kulissenführung gebildet ist.

2. Abdeckung nach Anspruch 1**, dadurch gekennzeichnet, daß** die Elemente (6a, 6; 7, 8) der Kulissenführung beidseits der Abdeckkappe (4) ausgebildet sind und jeweils eine Führungskulisse (6) und ein in dieser verdrehfest verschiebbares Gleitelement (8) aufweisen, das am Auslegerarm (7) ausgebildet ist.

3. Abdeckung nach Anspruch 1 oder 2, **dadurch gekennzeichnet, daß** die Führungskulisse (6) jeweils an einem karosseriefesten Halterungsarm ausgebildet und die Gleitelemente (8) jeweils an einem an der Abdeckkappe (4) ausgebildeten Auslegerarm (7) angeordnet sind.

4. Abdeckung nach Anspruch 3, **dadurch gekennzeichnet, daß** die Halterungsarme (6a) an einem karosseriefest an der Öffnung (3) angeordneten Rahmen (5) ausgebildet sind.

5. Abdeckung nach Anspruch 1, 2 oder 4, **dadurch gekennzeichnet, daß** die Abdeckkappe (4) durch den Kopf der Hub-Spritzdüse (2) betätigt wird.

6. Abdeckung nach Anspruch 3 oder 4, **dadurch gekennzeichnet, daß** an den Auslegerarmen (7) eine Rückholfeder (10) angreift, die ein karosseriefestes Widerlager (9) hat.

7. Abdeckung nach einem oder mehreren der Ansprüche 1 bis 3 oder 5, **dadurch gekennzeichnet, daß** die Abdeckkappe (4) mit angeschrägten Anlageflächen für den Rand der Karosserieöffnung (3) oder den Rahmen (5) versehen ist.

8. Abdeckung nach Anspruch 7, **dadurch gekennzeichnet, daß** der Rand der Karosserieöffnung (3) oder der Rahmen (5) mit angeschrägten Anlageflächen für die Abdeckkappe (4) versehen ist.

## Claims

1. Cover for a headlamp cleaning system which has a lifting spray nozzle (2), which can be brought through an opening (3) in an outer wall (1) fixed on the body between an inoperative position within the vehicle body and an operating position outside the same, having an actuable covering cap (4), which closes the opening (3) in the inoperative position and opens it up in the operating position and is secured pivotably on the body and is prestressed in the direction of its closed position, **characterized in that** the means of securing the covering cap (4) is formed from elements (6, 6a; 7, 8) of a slotted guide mechanism.

2. Cover according to Claim 1, **characterized in that** the elements (6a, 6; 7, 8) of the slotted guide mechanism are formed on both sides of the covering cap (4) and each have a guide slot (6) and a sliding element (8), which can be displaced in a rotationally fixed manner in the latter and is formed on the extension arm (7).

3. Cover according to Claim 1 or 2, **characterized in that** the guide slot (6) is formed in each case on a securing arm fixed on the body and the sliding elements (8) are arranged in each case on an extension arm (7) formed on the covering cap (4).

4. Cover according to Claim 3, **characterized in that** the securing arms (6a) are formed on a frame (5) arranged fixed on the body at the opening (3).

5. Cover according to Claim 1, 2 or 4, **characterized in that** the covering cap (4) is actuated by the head of the lifting spray nozzle (2).

6. Cover according to Claim 3 or 4, **characterized in that** a restoring spring (10) which has an abutment (9) fixed on the body engages on the extension arms (7).

7. Cover according to one or more of Claims 1 to 3 or 5, **characterized in that** the covering cap (4) is provided with bevelled bearing surfaces for the edge of the body opening (3) or the frame (5).

8. Cover according to Claim 7, **characterized in that** the edge of the body opening (3) or the frame (5) is provided with bevelled bearing surfaces for the covering cap (4).

## Revendications

1. Couvercle pour un dispositif de nettoyage de phares, qui présente un gicleur déplaçable (2) pouvant être amené par une ouverture (3) d'une paroi extérieure (1) fixée à la carrosserie entre une position de repos à l'intérieur de la carrosserie de véhicule et une position de fonctionnement à l'extérieur de celle-ci, avec un volet de recouvrement (4) actionnable, fermant l'ouverture (3) dans la position de repos et l'ouvrant dans la position de fonctionnement, lequel est maintenu de manière à pouvoir pivoter sur la carrosserie et est précontraint dans la direction de sa position de fermeture, **caractérisé en ce que** la fixation du volet de recouvrement (4) est formée par des éléments (6, 6a ; 7, 8) d'un guidage à glissière.

2. Couvercle selon la revendication 1, **caractérisé en ce que** les éléments (6a, 6 ; 7, 8) du guidage à glissière sont réalisés de part et d'autre du volet de recouvrement (4) et présentent à chaque fois une glissière (6) et un élément coulissant (8) pouvant se déplacer de manière non rotative dans celle-ci, lequel est réalisé sur le bras cantilever (7).

3. Couvercle selon la revendication 1 ou 2,
**caractérisé en ce que** la glissière (6) est réalisée à chaque fois sur un bras de fixation fixé à la carrosserie, et les éléments coulissants (8) sont disposés à chaque fois sur un bras cantilever (7) réalisé sur le volet de recouvrement (4).

4. Couvercle selon la revendication 3, **caractérisé en ce que** les bras de fixation (6a) sont réalisés sur un cadre (5) disposé fixement sur la carrosserie au niveau de l'ouverture (3).

5. Couvercle selon la revendication 1, 2 ou 4, **caractérisé en ce que** le volet de recouvrement (4) est actionné par la tête du gicleur déplaçable (2).

6. Couvercle selon la revendication 3 ou 4, **caractérisé en ce qu'**un ressort de rappel (10) vient en prise sur les bras cantilever (7) et présente une butée (9) fixée à la carrosserie.

7. Couvercle selon l'une quelconque ou plusieurs des revendications 1 à 3 ou 5, **caractérisé en ce que** le volet de recouvrement (4) est pourvu de surfaces d'appui biseautées pour le bord de l'ouverture de la carrosserie (3) ou pour le cadre (5).

8. Couvercle selon la revendication 7, **caractérisé en ce que** le bord de l'ouverture de la carrosserie (3) ou le cadre (5) est pourvu de surfaces d'appui biseautées pour le volet de recouvrement (4).
